# EUROPÄISCHE PATENTSCHRIFT

(11) **EP 3 404 297 B1**
(45) Veröffentlichungstag und Bekanntmachung des Hinweises auf die Patenterteilung: **19.06.2024**
(21) Anmeldenummer: 18160473.7
(22) Anmeldetag: 07.03.2018
(51) Int. Cl.: F16J 13/14, B25B 27/02, F02B 77/00, F16J 15/04, F16L 55/11, B21D 35/00

(54) **VERSCHLUSSDECKEL ZUM VERSCHLIESSEN EINER BOHRUNG, SOWIE EINER VORRICHTUNG ZUM GREIFEN EINES ENTSPRECHENDEN VERSCHLUSSDECKELS**
CLOSING LID FOR CLOSING A BORE, AS WELL AS A DEVICE FOR GRIPPING A CORRESPONDING CLOSURE LID
DISPOSITIF OBTURATEUR DESTINÉ À FERMER UN ALESAGE, AINSI QU'UN OUTIL DE PRÉHENSION D'UN TEL DISPOSITIF

(30) Priorität: 19.05.2017 DE 102017110975
(43) Veröffentlichungstag der Anmeldung: 21.11.2018
(73) Patentinhaber: E. Winkemann GmbH, 58840 Plettenberg (DE)
(72) Erfinder: Stedtnitz, Tim, 58849 Herscheid (DE)
(74) Vertreter: Lenzing Gerber Stute

(56) Entgegenhaltungen:
- EP-A1- 0 928 655
- DE-A1- 3 336 304
- DE-A1-102015 106 965
- GB-A- 507 683
- GB-A- 1 452 378
- SU-A1- 1 146 183
- US-A- 2 380 068
- US-A- 2 641 831
- US-A- 5 924 321
- US-A1- 2016 052 688

## Beschreibung

Die vorliegende Erfindung betrifft einen Verschlussdeckel zum Verschließen einer Bohrung sowie eine Vorrichtung zum Greifen eines entsprechenden Verschlussdeckels, welcher topfförmig ausgebildet ist und eine Bodenwandung sowie eine daran angeformte Seitenwandung aufweist.

Die vorliegende Erfindung betrifft zudem ein Verfahren zur Herstellung eines solchen Verschlussdeckels.

Verschlussdeckel unterschiedlichster Art sind seit langem bekannt. Aus GB 1 452 378 A ist beispielsweise eine topfförmige Hülse oder Kappe aus einem dünnwandigen Material sowie ein Herstellungsverfahren dafür bekannt, wobei die Hülse eine umlaufende Rille an ihrer Innen- oder Außenseite aufweist. Die Rille dient beispielsweise der Aufnahme von Schmiermittel, eines Sicherungsrings oder einer Feder. Die Hülse wird hergestellt, indem zuerst ein rundes Plättchen geformt wird, welches mit einer kreisförmigen Rille versehen wird und dann durch Tiefziehen in seine Topfform gebracht wird. Die resultierende Grundform hat eine im wesentlichen zylindrische Mantelfläche mir geraden Seitenwandungen. Die Hülse oder Kappe aus GB 1 452 378 A eignet sich insbesondere für den Einsatz als bewegtes Teil in Maschinen, wenn ein möglichst guter Rundlauf gewährleistet werden soll. Daher ist die Hülse bzw. die Kappe für das Verschließen von Bohrungen, bei dem es auf eine fixierende und dichtende Wirkung ankommt, ungeeignet.

Neben der Beschaffenheit des Verschlussdeckels stellt sich in der Praxis stets auch die Frage, wie der Verschlussdeckel in die gewünschte Position gebracht werden bzw. wieder von dort entfernt werden kann. Zu diesem Zweck sind Greifvorrichtungen, sogenannte "sleeve puller", bekannt. So beschreibt beispielsweise die US 2 641 831 A ein Werkzeug zum Abziehen von Einsteckhülsen aus Bohrungen. An seinem unteren Ende ist ein hohles Gehäuse angeordnet, das mehrere Öffnungen aufweist, aus denen Gleitelemente ein und ausgefahren werden können. Dafür werden die Gleitelemente gegen die Federn mittels eines Keils verschoben. Die ausgefahrenen Gleitelemente dienen dazu, die Einsteckhülse zu greifen und aus einer Bohrung herausziehen zu können. In der Ausgangsposition wirken die Federn dem Ausfahren der Gleitelemente entgegen und drücken diese in radialer Richtung in das Werkzeug hinein. Zum Ausfahren der Gleitelemente ist ein Keil mit einem Steuerungsstab vorgesehen. Der Keil blockiert die Gleitelemente in radialer Richtung. Das durch die Federn induzierte Einfahren der Gleitelemente ist folglich durch den blockierenden Keil begrenzt. Der Steuerungsstab wirkt bei Bedarf mit dem Keil derart zusammen, dass die Gleitelemente entgegen der Federkraft herausgeschoben werden.

Ferner offenbart GB 507 683 A ein Werkzeug zum Herausziehen oder Einsetzen von hohlen Elementen, wie beispielsweise Büchsen, aus bzw. in ein Gehäuse. Dazu weist das Werkzeug einen Schaft auf, der an einem Ende eine Nocke mit zwei parallelen planen Flächen aufweist. Die planen Flächen dienen der Lagerung von zwei Greifelementen, die zwischen zwei Bechern gehalten werden. Zwischen den Greifelementen ist eine Feder angeordnet, die beide Greifelemente in radialer Richtung nach außen drückt. Wird das Werkzeug in ein hohles Element eingeführt und anschließend gedreht, werden die Greifelemente von der Nocke derart nach außen gedrückt, dass die Kraft, die dadurch auf das hohle Element aufgebracht wird, ausreichend groß ist, um das Element herausziehen oder einsetzen zu können.

Aus SU 1146183 A ist ein Werkzeug für das Verschrauben von Rohren bekannt. Dazu weist das Werkzeug ein zylindrisches Gehäuse auf, in dem eine Durchgangsbohrung ausgebildet ist, in der zwei Halteelemente diametral angeordnet bzw. gelagert sind, die aus einer Mantelfläche des Gehäuses herausragen. Zwischen den Halteelementen ist eine Feder angeordnet, die die Halteelemente nach außen drückt. Wird das Gehäuse in einen Hohlkörper eingebracht, werden die Halteelemente von der Innenwandung des Hohlkörpers gegen die Federkraft zumindest teilweise in das Gehäuse hineingedrückt, sodass diese beispielsweise in eine Aussparung im Rohr eingreifen können. Wird das Gehäuse wieder aus dem Hohlkörper entfernt, springen die Halteelemente durch die Federkraft in ihre Ausgangsstellung zurück.

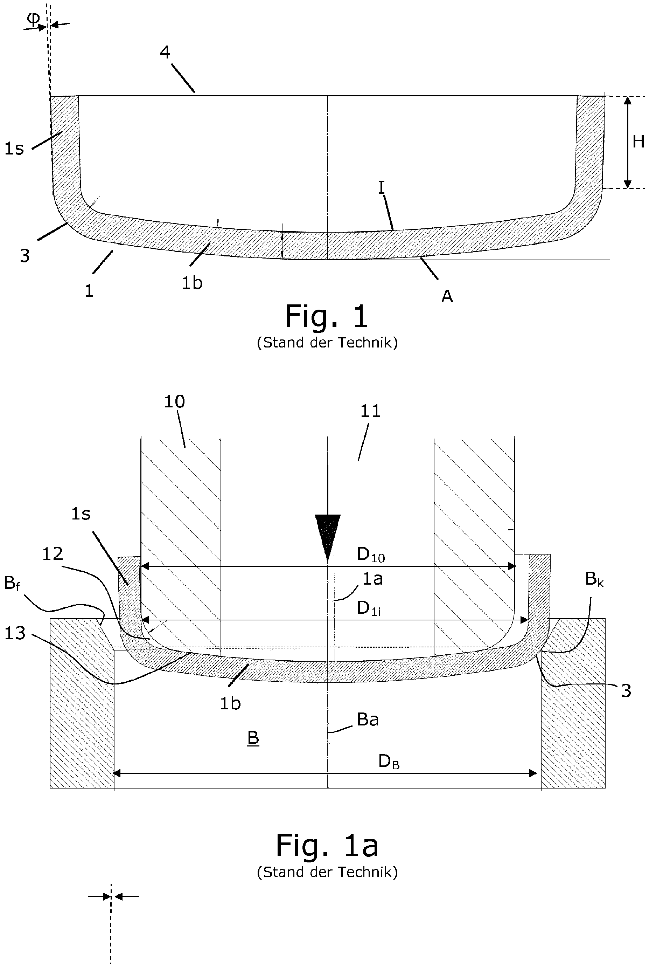

Ein gattungsgemäßer Verschlussdeckel 1 für das Verschließen von Bohrungen ist aus der DIN 443 vorbekannt und in den Figuren 1 und 1a in seiner ursprünglichen Gestalt dargestellt, in der er noch nicht in die Bohrung B klemmend eingebracht worden ist. Er weist meistens eine nach außen gewölbte Bodenwandung 1b sowie daran angeformt eine leicht konische Seitenwandung 1s auf. Die Bodenwandung kann aber auch eben im Wesentlichen ausgeführt sein. Der Verschlussdeckel 1 wird durch Tiefziehen eines Bleches hergestellt. Die Bodenwandung 1b ist an ihrem äußeren Rand 3 nach oben gebogen und geht nahtlos in die Seitenwandung 1s über, welche konisch (Winkel ϕ) oder zylindrisch ausgebildet sein kann. Der aus der DIN 443 bekannte Verschlussdeckel wird i.d.R. mittels eines Einpressdorns gegriffen und eingesetzt. Dabei ist der Einpressdorn meist als Sauggreifer 10, 11 ausgebildet, welcher in das Innere I des Verschlussdeckels 1 mit seiner Spitze 13 eingreift. Der Sauggreifer 10 weist einen zentrischen Kanal 11 auf, in der ein Unterdruck erzeugt werden kann, sobald die Spitze 13 des Sauggreifers 10 an der Innenseite I der Bodenwandung 1b anliegt. Aufgrund der gewölbten äußeren Form der Bodenwandung 1b kann der Verschlussdeckel 1 nicht ganz plan und damit evtl. schief auf einer Auflagefläche aufliegen. Dies muss auch bei der Dimensionierung des Durchmessers der Spitze 13 des Sauggreifers 10 berücksichtigt werden, welcher stets senkrecht von oben in das Topfinnere eingebracht wird. Damit der Sauggreifer problemlos auch in schief liegende Verschlussdeckel eingreifen kann, ist der Außendurchmesser des Sauggreifers 10 kleiner als der Innendurchmesser 1i des Verschlussdeckels 1 auszubilden. Aufgrund der kugelförmig ausgebildeten Spitze 13 des Sauggreifers 10 und der evtl. schiefen Lage des Verschlussdeckels 1 kann der Verschlussdeckel zunächst schief mittels des Sauggreifers 10 aufgehoben werden und dementsprechend schief in die Bohrung eingebracht werden. Nach dem Aufsetzen auf die Fase B_{f} der Bohrung B zentriert sich der Verschlussdeckel 1 beim weiteren Eindrücken in die Bohrung B meist nicht vollständig relativ zum Sauggreifer 10, wodurch es beim weiteren Eindrücken in die Bohrung B zu einem schiefen Sitz des Verschlussdeckels 1 in der Bohrung B kommt. Die vor dem Einbringen des Verschlussdeckels 1 in die Bohrung B eingebrachte Dichtmasse legt sich bei der schiefen Lage nur ungenügend an bestimmte Bereiche des Deckels, wodurch es zu Undichtigkeiten kommen kann.

Meist wird der Verschlussdeckel galvanisch beschichtet. Aufgrund der Deckelform wirkt der Verschlussdeckel dabei als schöpfendes Teil, wodurch beim Beschichtungsvorgang an der Innenseite des Deckels der Beschichtungswerkstoff oft nicht gleichmäßig aufgetragen wird oder sich dort Rückstände aus den Bädern der Galvanik ansammeln. Dies hat zur Folge, dass beim Ansaugen des Deckels mit dem zuvor beschriebenen Sauggreifer der Verschlussdeckel nicht gerade sondern schräg gegriffen wird, das Ansaugen von vornherein fehlschlägt oder der Deckel während des Transports vom Sauggreifer abfällt.

Eine Weiterentwicklung eines gattungsgemäßen Verschlussdeckels ist zudem aus DE 10 2015 106 965 A1 bekannt. Dort ist ein topfförmiger Verschlussdeckel für eine Bohrung beschrieben, wobei die Seitenwandung einen unteren umlaufenden Bereich und einen oberen umlaufenden Bereich aufweisen, wobei zwischen den beiden Bereichen ein Übergangsbereich angeordnet ist. Die an den Übergangsbereich angrenzenden obere bzw. untere Bereich haben unterschiedliche Durchmesser, wobei der Durchmesser des angrenzenden oberen Bereichs größer ist als der des angrenzenden unteren Bereichs. Dadurch entsteht an der Außenseite der Seitenwandung im Wesentlichen ein Knick. Durch diesen Knick bzw. durch die unterschiedlichen Durchmesser wird der Verschlussdeckel beim Einbringen in eine Bohrung vor dem Einpressen zunächst zentriert und parallel zur Bohröffnung ausgerichtet. Dadurch wird ein sicheres und abdichtendes Verschließen der Bohrung gewährleistet.Eine Aufgabe der vorliegenden Erfindung ist es, einen Verschlussdeckel und eine entsprechende Greifvorrichtung bereitzustellen, so dass ein sicheres Greifen und ein sicherer Transport gewährleistet ist, wobei der Verschlussdeckel zudem automatisch relativ zur Vorrichtung stets gleich ausgerichtet ist und hierdurch ein sicheres Verschließen der Bohrung ermöglicht wird.

Eine weitere Aufgabe der vorliegenden Erfindung besteht darin, ein Herstellungsverfahren für einen solchen Verschlussdeckel bereitzustellen.

Diese Aufgaben werden erfindungsgemäß mit einem Verschlussdeckel nach den Ansprüchen 1 bis 5, einer Greifvorrichtung nach einem der Ansprüche 6 bis 14 sowie einem Verfahren zum Verschließen einer Bohrung mittels eines Verschlussdeckels nach Anspruch 15 gelöst.

Der erfindungsgemäße Verschlussdeckel dient zum Verschließen einer Bohrung zum Beispiel in einem Motorblock, Getriebegehäuse oder Zylinderkopf. Der Verschlussdeckel ist topfförmig ausgebildet und weist eine Bodenwandung sowie eine sich daran anschließende Seitenwandung auf. Die Seitenwandung des Topfes weist ihrerseits erfindungsgemäß an ihrer Innenseite eine umlaufende Vertiefung auf. Die Vertiefung ist rillenförmig oder nutförmig ausgebildet. Sie lässt sich leicht beim Herstellen des Verschlussdeckels in das noch nicht tiefgezogene Ausgangswerkstück einprägen. Die Vertiefung kann im Querschnitt u-oder v-förmig ausgebildet sein. Die Breite und Tiefe der Vertiefung muss an die Dimensionen der Eingriffsmittel der Greifvorrichtung angepasst sein, insbesondere derart, dass ein sicheres Greifen des Verschlussdeckels mittels der Greifvorrichtung gewährleistet ist.

Auch der Abstand der Vertiefung von der Innenseite der Bodenwandung des Verschlussdeckels muss auf die Greifvorrichtung abgestimmt sein, so dass beim Eingreifen der Greifvorrichtung in den Verschlussdeckel gewährleistet ist, dass die Eingreifelemente in die Vertiefung gelangen, insbesondere eingreifen bzw. einrasten, können.

Die Seitenwandung des Verschlussdeckels kann zylindrisch, d.h. senkrecht zur Bodenwandung ausgebildet sein, so dass bei gleichbleibender Wandungsdicke der Innen- sowie auch der Außendurchmesser des Topfes konstant ist. Die Seitenwandung kann jedoch auch leicht konisch ausgebildet sein, so dass der Innen- sowie Außendurchmesser von der Bodenwandung aus bis zur Topföffnung zunimmt bzw. größer wird. Erfindungsgemäß ist die Seitenwandung konisch ausgebildet.

Die Seitenwandung kann in einer besonderen Ausführungsform an ihrer Außenseite auch mindestens eine umlaufende Vertiefung, insbesondere in Form einer Rille oder Nut, aufweisen. Diese umlaufende Vertiefung(en), dient zur Aufnahme von Klebstoff und/oder Dichtungsmaterial, so dass der in die Bohrung eingepresste Verschlussdeckel fest, abdichtend und unverlierbar die Bohrung verschließt.

Der Verschlussdeckel wird vorteilhaft mittels Stanzen, Prägen und Tiefziehen hergestellt, wobei die umlaufende Vertiefung in die Oberfläche des anschließend tiefzuziehenden Teils, insbesondere in Form einer kreisrunden Platte, als kreisförmige Vertiefung eingeprägt wird.

Die erfindungsgemäße Greifvorrichtung dient zum Greifen eines Verschlussdeckels und zum Transport und Einsetzen bzw. Einpressen des Verschlussdeckels in die zu verschließende Bohrung. Nach dem Ergreifen des Verschlussdeckels kann dieser auch noch zu einer Station gebracht werden, in der Dichtungsmittel und/oder Klebstoff auf die Außenseite des Verschlussdeckels aufgebracht wird, um den Verschlussdeckel danach in die zu verschließende Bohrung einzuführen bzw. einzupressen.

Die erfindungsgemäße Greifvorrichtung weist einen, insbesondere zylinderförmigen und im Querschnitt kreisförmigen, Endbereich auf, an dem um den Umfang herum mehrere, insbesondere drei, aus der Oberfläche der Mantelfläche herausragende Eingriffselemente angeordnet sind. Der Endbereich muss von seinen äußeren Abmessungen her so ausgebildet sein, dass er in den topfförmigen Verschlussdeckel eingreifen kann. Die Eingriffselemente müssen dabei so angeordnet sein, dass sichergestellt ist, dass sie in die umlaufende Vertiefung der Innenseite der Seitenwandung des Verschlussdeckels zum Eingriff gelangen, insbesondere einrasten.

Die Greifvorrichtung dient zusätzlich zum Einpressen des gegriffenen Verschlussdeckels in eine Bohrung und weist hierzu eine stirnseitige Anpressfläche auf, die beim Einpressen möglichst vollflächig gegen die Innenseite der Bodenwandung des Verschlussdeckels drückt. Die Eingriffselemente müssen daher in einem Abstand zur Anpressfläche angeordnet werden, der gleich oder kürzer ist als der Abstand zwischen Innenseite der Bodenwandung und Vertiefung des Verschlussdeckels ist.

Durch das Eingreifen bzw. Einrasten der Eingriffselemente in die Vertiefung wird der Verschlussdeckel vorteilhaft zur Eingriffsvorrichtung ausgerichtet, so dass ein sicheres, genaues und insbesondere gerades Einbringen in die zu verschließende Bohrung gewährleistet ist. Der Endbereich dient somit als Greifer und Einpressdorn zusammen.

Erfindungsgemäß sind die Eingriffselemente gegen eine Federkraft in den Endbereich zumindest teilweise eindrückbar. Die Eingriffselemente sind Kugeln von Kugelrasten, die in dem Endbereich der Greifvorrichtung eingeschraubt sind.

Die Eingriffselemente können aber auch durch Elemente aus einem biegeelastischen Material gebildet sein.

Zur Aufnahme der Eingriffselemente weist der Endbereich mehrere radiale Bohrungen auf, in denen die Eingriffselemente angeordnet sind. Um die Eingriffselemente in die Bohrungen einschrauben zu können, sind diese zumindest bereichsweise mit einem Innengewinde versehen. Sofern Kugelrasten als Eingriffselemente verwendet werden, können diese mit ihrem Außengewinde in die Gewinde der Bohrungen eingeschraubt werden. Die Bohrungen erstrecken sich hierbei vorteilhaft quer durch den gesamten Endbereich und bilden somit Durchgangskanäle, die sich in der Mitte des Endbereiches kreuzen. Sofern die Kugelrasten ein Gehäuse aufweisen, welches mit einem Außengewinde versehen ist, weisen sie meist an ihrer Hinterseite eine Ausnehmung für den Eingriff eines Werkzeugs auf. Dieses kann zum Einschrauben der Kugelrasten durch die Bohrung geschoben und zum Eingriff in die Ausnehmung gebracht werden, wonach dann die Kugelraste in die Bohrung soweit eingeschraubt werden kann, dass die Kugel genügend weit aus der Bohrung herausragt. Die Länge des Gehäuses der Kugelraste sollte dabei kürzer als der Radius des Endbereichs sein, so dass bei bereits einer eingeschraubten Kugelraste die übrigen Kugelrasten mittels des durch die übrigen Bohrungen geführten Werkzeugs in die jeweilige Bohrung einschraubbar sind.

Nachfolgend werden Ausführungsformen des erfindungsgemäßen Verschlussdeckels sowie Ausführungsformen der erfindungsgemäßen Greifvorrichtung anhand von Zeichnungen näher erläutert.

Es zeigen:
- Fig. 1:: eine Querschnittsdarstellung eines Verschlussdeckels nach dem Stand der Technik gemäß DIN 443;
- Fig. 1a:: einen Einsetzvorgang des Verschlussdeckels gemäß Figur 1 mittels eines Sauggreifers;
- Fig. 2a:: eine erste mögliche Ausführungsform eines erfindungsgemäßen Verschlussdeckels mit ebener Bodenwandung;
- Fig. 2b:: eine zweite mögliche Ausführungsform eines erfindungsgemäßen Verschlussdeckels mit gewölbter Bodenwandung;
- Fig. 3:: eine Querschnittsdarstellung durch eine erfindungsgemäße Greifvorrichtung;
- Fig. 4:: eine Querschnittsdarstellung durch eine Greifvorrichtung nach Figur 3 mit gegriffenem erfindungsgemäßen Verschlussdeckel gemäß Figur 2b;
- Fig. 5:: eine Querschnittsdarstellung durch eine Greifvorrichtung nach Figur 3 mit gegriffenem erfindungsgemäßen Verschlussdeckel gemäß Figur 2b beim Einpressvorgang des Verschlussdeckels in eine Bohrung;
- Fig. 5a:: einen Teilausschnitt aus Figur 5;
- Fig. 6:: einen in eine Bohrung eingepressten erfindungsgemäßen Verschlussdeckel.
- Fig. 7:: einen erfindungsgemäßen Verschlussdeckel 1, der an seiner Außenwandung eine umlaufende Vertiefung bzw. Nut aufweist, die zur Aufnahme von Dichtungsmittel und/oder Klebstoff dient.

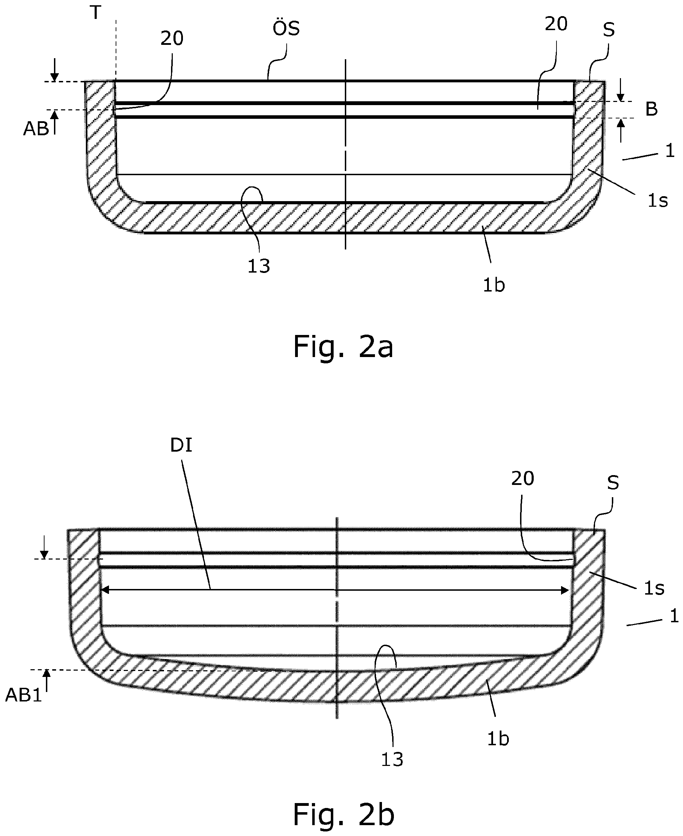

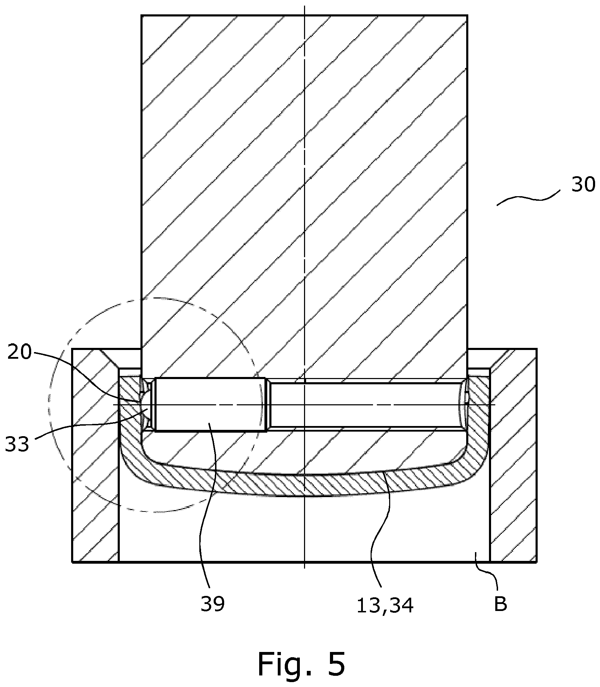

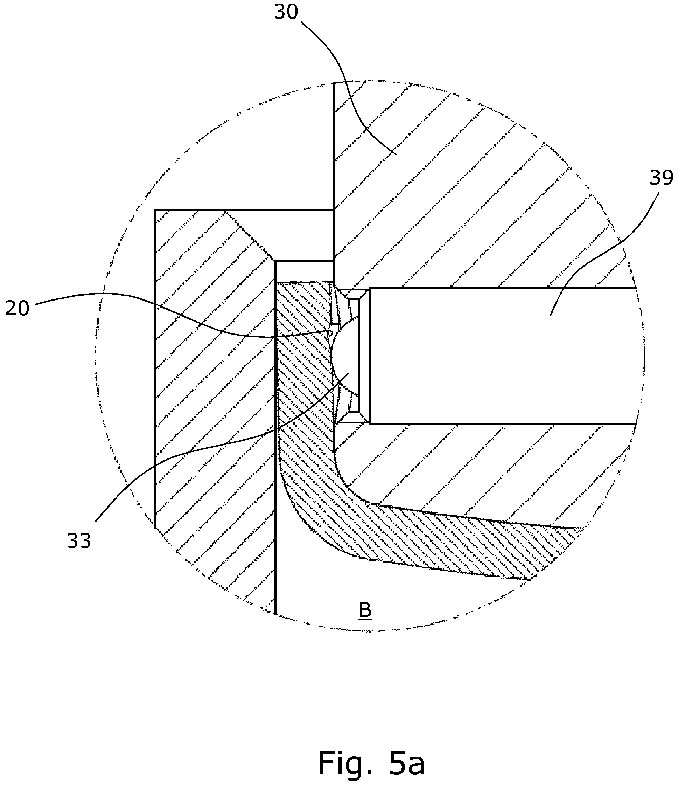

Die Figur 2a zeigt eine erste mögliche Ausführungsform eines erfindungsgemäßen Verschlussdeckels 1 mit ebener Bodenwandung 1b. An die Bodenwandung 1b schließt sich nach oben hin die Seitenwandung 1s an, an deren Innenseite eine umlaufende Vertiefung 20 eingebracht, insbesondere eingeprägt, ist. Der Prägevorgang der Vertiefung kann insbesondere vor dem Tiefziehen des topfförmigen Verschlussdeckels 1 erfolgen. Die Vertiefung 20 weist eine Breite B und eine Tiefe T auf und befindet sich im Abstand AB zur oberen Stirnwandung S, die die Öffnung ÖS des Topfes bildet bzw. begrenzt. Die zylindrische Seitenwandung 1s ist leicht konisch ausgebildet, so dass ihr Außendurchmesser von der Bodenwandung bis zur Öffnung ÖS leicht zunimmt. Beim Eindrücken bzw. Einpressen des Verschlussdeckels 1 in eine Bohrung B, wie es in Figur 5 beispielhaft dargestellt ist, wird die Seitenwandung 1s nach innengedrückt und liegt möglichst vollflächig an der Innenwandung der Bohrung an. Zur besseren Abdichtung kann noch ein Dichtungsmittel zwischen Verschlussdeckel 1 und Bohrungsinnenwandung eingebracht werden, welches vor dem Einpressen auf den Verschlussdeckel 1 aufgetragen oder in die Bohrung B eingebracht wird.

Wie in Figur 2b dargestellt, kann in einer zweiten möglichen Ausführungsform des erfindungsgemäßen Verschlussdeckels 1 dieser eine gewölbte Bodenwandung 1b aufweisen.

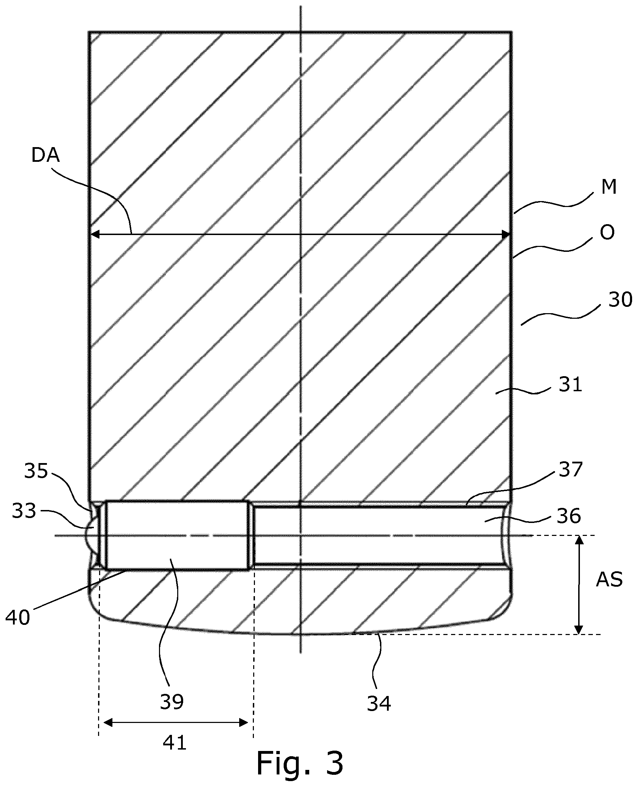

Die Figur 3 zeigt eine Querschnittsdarstellung durch eine erfindungsgemäße Greifvorrichtung 30. Diese kann z.B. von einem nicht dargestellten Roboterarm oder sonstiger Vorrichtung gehalten und geführt sein. Die Greifvorrichtung 30 weist einen zylindrischen Endbereich 31 mit einem Außendurchmesser DA auf. Dieser kann auch konisch oder im Querschnitt mehreckig, insbesondere auch dreiecksförmig, ausgebildet sein. Er weist eine zylindrische Mantelfläche M auf, aus der die Eingriffselemente 33 herausragen. Der Umfangsbereich der Mantelfläche M, in dem die Eingriffselemente 33 verteilt angeordnet sind, wird als Bereich 35 bezeichnet. Die Eingriffselemente 33 sind Kugeln von Kugelrasten 39, die mit ihrem Gehäuse in Innengewinde 37 von Bohrungen 36 eingeschraubt sind. Die Bohrungen 36 erstrecken sich dabei durch den gesamten Endbereich 31, so dass von der gegenüberliegenden Öffnung der Bohrung 36 ein Schraubwerkzeug eingeführt werden kann, mit dem die Kugelrasten 39 in die Bohrungen einschraubbar sind. Der Bereich 35 befindet sich in einem Abstand AS von der stirnseitigen Anpressfläche 34 des Endbereiches 31. Der Abstand AS ist dabei gleichlang oder kürzer als der Abstand AB1 in Figur 2b, damit stets sichergestellt ist, dass die Eingriffselemente 33 in die Vertiefung 20 eingreifen können. Die stirnseitige Anpressfläche 34 sollte dabei von ihrer Form und Gestalt (eben oder gewölbt) an die Form der Innenseite 13 der Bodenwandung 1b angepasst sein, damit sie möglichst vollflächig beim Einpressen an dieser zur Anlage kommt. Die Kugeln 33 stehen dabei im unbelasteten Zustand soweit aus der Mantelfläche hervor, dass sich ein Außenradius im Bereich 35 ergibt, der größer ist als der Innendurchmesser der Seitenwandung 1s in den Nachbarbereichen zu der Vertiefung 20.

Die Kugeln 33 sind dabei federbelastet und können gegen eine Federkraft in Richtung des Endbereichs 31 bzw. in diesen oder das Gehäuse der Kugelrasten 39 hineingedrückt werden.

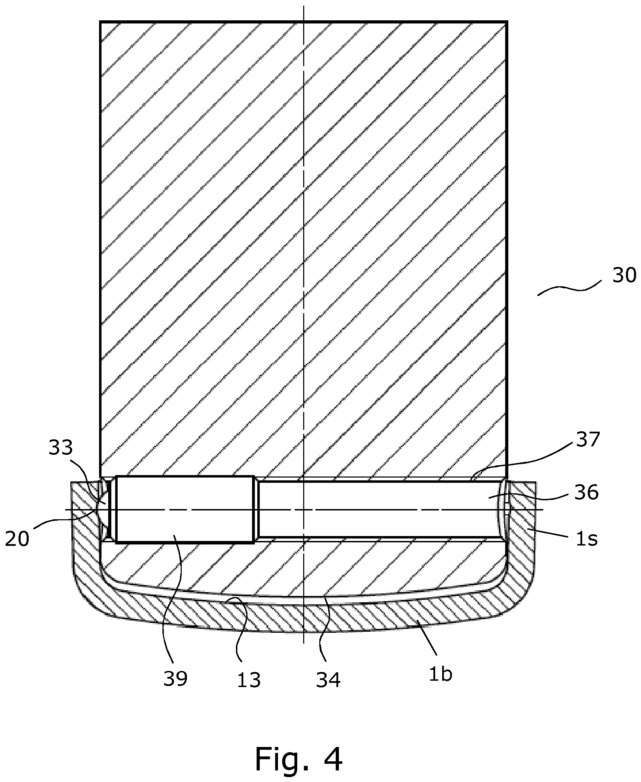

Die Figur 4 zeigt eine Querschnittsdarstellung durch eine Greifvorrichtung 30 nach Figur 3 mit gegriffenem erfindungsgemäßem Verschlussdeckel 1 gemäß Figur 2b. Beim Ergreifen des Verschlussdeckels 1 mittels der Greifvorrichtung 30, wird der Endbereich 31 in die Öffnung ÖS des Verschlussdeckels 1 eingeführt, wobei die Kugeln bzw. Eingriffselemente 33 gegen die Innenwandung der Seitenwandung 1s des Verschlussdeckels drücken und von dieser wiederum in die Kugelrasten 39 hineingedrückt werden. Sobald sich die Kugeln 33 im Bereich der Vertiefung 20 befinden, werden sie durch die Federkraft der Kugelraste 39 nach außen und in die Vertiefung 20 hineinbewegt und rasten dort ein. Der Verschlussdeckel 1 ist dabei sicher von der Greifvorrichtung 30 gegriffen und kann von dieser an weitere Arbeitsstationen bewegt werden.

Die Figur 5 zeigt den Einpressvorgang des Verschlussdeckels 1 in eine Bohrung B. Beim Einpressen wird die Seitenwandung 1s des Verschlussdeckels 1 leicht nach innen gebogen und drückt aufgrund ihrer Elastizität fest gegen die Innenwandung der Bohrung B. Aufgrund der auftretenden Kräfte wird der Endbereich 31 noch weiter in den Verschlussdeckel 1 hineingepresst, wodurch die Eingreifelemente 33 ein wenig aus der Vertiefung 20 herausbewegt werden. Der Endbereich 31 liegt nunmehr an der Innenseite 13 der Bodenwandung 1b mit seiner stirnseitigen Anlagefläche 34 an und fungiert nunmehr als Einpressdorn. Die Figur 5a zeigt einen Teilausschnitt der Figur 5.

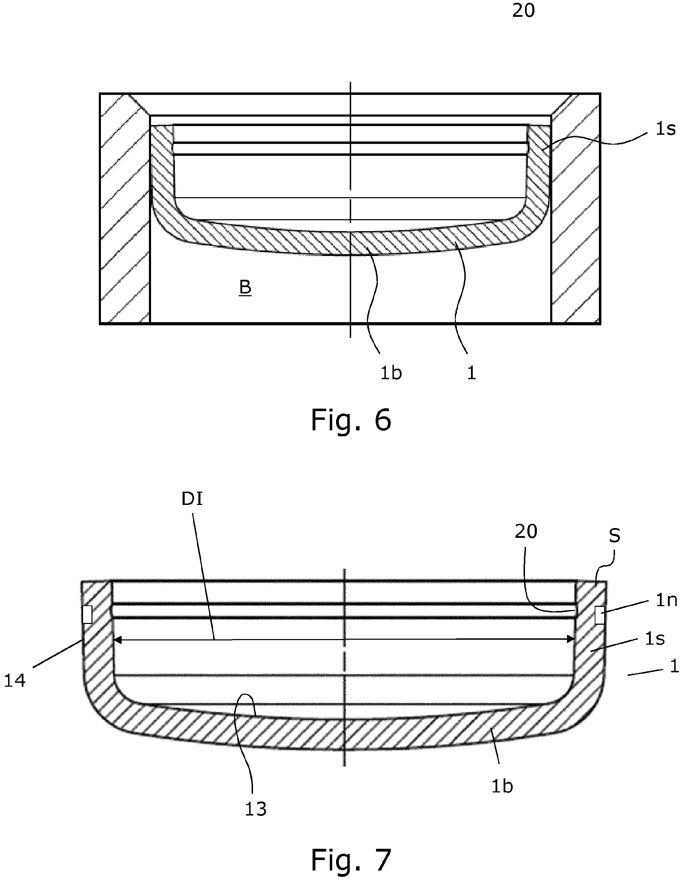

Die Figur 6 zeigt den in eine Bohrung B fertig eingepressten erfindungsgemä-βen Verschlussdeckel 1, wobei die Greifvorrichtung 30 bereits entfernt worden ist.

Die Figur 7 zeigt einen erfindungsgemäßen Verschlussdeckel 1 der dahingehend weitergebildet ist, dass er an seiner Außenwandung eine umlaufende Vertiefung bzw. Nut 1n aufweist, die zur Aufnahme von Dichtungsmittel und/oder Klebstoff dient.

## Patentansprüche

1. Verschlussdeckel (1) für eine Bohrung (B), welcher mit einer Greifvorrichtung (30) in die Bohrung (B) einbringbar ist, wobei der Verschlussdeckel (1) einen Innendurchmesser (DI) aufweist, wobei der Verschlussdeckel (1) topfförmig ausgebildet ist und eine Bodenwandung (1b) sowie eine daran angeformte Seitenwandung (1s) aufweist, wobei die Seitenwandung (1s) umlaufend und konisch ausgebildet ist, **dadurch gekennzeichnet, dass** die Seitenwandung (1s) an ihrer Innenseite mindestens eine umlaufende Vertiefung (20) in Form einer Rille oder Nut aufweist, wobei die umlaufende Vertiefung (20) zum Eingriff von Eingriffselementen (33) der Greifvorrichtung (30) dient.

2. Verschlussdeckel (1) nach Anspruch 1, **dadurch gekennzeichnet, dass** die Breite (B) der Vertiefung (20) 0,4 - 2,0 mm beträgt.

3. Verschlussdeckel (1) nach einem der vorhergehenden Ansprüche,
**dadurch gekennzeichnet, dass** die Tiefe (T) der Vertiefung (20) 0,2 - 1,0 mm beträgt.

4. Verschlussdeckel (1) nach einem der vorhergehenden Ansprüche,
**dadurch gekennzeichnet, dass** der Abstand (AB) der Vertiefung (20) von der Stirnseite (S) der Öffnungsseite (ÖS) des Verschlussdeckels (1) 1,5 - 4,5 mm beträgt.

5. Verschlussdeckel (1) nach einem der vorhergehenden Ansprüche,
**dadurch gekennzeichnet, dass** die Seitenwandung (1s) an ihrer Außenseite (14) mindestens eine umlaufende Vertiefung (1n), insbesondere Rille oder Nut, aufweist, die zur Aufnahme von Klebstoff und/oder Dichtungsmaterial dient.

6. Greifvorrichtung (30) zum Greifen eines Verschlussdeckels (1) nach einem der Ansprüche 1 bis 5, wobei die Greifvorrichtung (30) einen Endbereich (31) aufweist, an dem um den Umfang herum mehrere, aus der Oberfläche (O) der Mantelfläche (M) herausragende Eingriffselemente (33) angeordnet sind und wobei Eingriffselemente (33) sich gegen eine Federkraft in den Endbereich (31) zumindest teilweise hineindrücken lassen, **dadurch gekennzeichnet, dass** ein Bereich (35) mehrere radiale Bohrungen (36) aufweist, in denen die Eingriffselemente (33) angeordnet sind und wobei die Bohrungen (36) zumindest bereichsweise mit einem Innengewinde (37) versehen sind, in die jeweils eine Kugelraste (39) einschraubbar bzw. eingeschraubt ist, wobei die Kugeln der Kugelrasten (39) die Eingriffselemente (33) bilden.

7. Greifvorrichtung (30) zum Greifen eines Verschlussdeckels (1) nach Anspruch 6, **dadurch gekennzeichnet, dass** der Endbereich (31) eine zylindrische oder kegelförmige Mantelfläche (M) aufweist.

8. Greifvorrichtung (30) nach Anspruch 6 oder 7, **dadurch gekennzeichnet, dass** der Endbereich (31) im Querschnitt kreisförmig ausgebildet ist.

9. Greifvorrichtung (30) nach einem der Ansprüche 6 bis 8, **dadurch gekennzeichnet, dass** der Endbereich (31) von seiner Form und seinem Durchmesser her so gestaltet ist, dass er in den topfförmigen Verschlussdeckel (1) eingreifen kann, wobei der äußere Durchmesser (DA) des umlaufenden Bereichs (35) des Endbereichs (31), in dem die Eingriffselemente (33) angeordnet sind, kleiner als der Innendurchmesser (DI) der Seitenwandung (1s) des Verschlussdeckels (1) ist.

10. Greifvorrichtung (30) nach einem der Ansprüche 6 bis 9, **dadurch gekennzeichnet, dass** der Endbereich (31) eine Stirnseite (34) aufweist, die als Anlagefläche ausgebildet ist, und die Greifvorrichtung (30) beim Einpressen des Verschlussdeckels (1) in eine Bohrung mit der Stirnseite gegen die Innenseite (13) der Bodenwandung (1b) des Verschlussdeckels (1) drückt.

11. Greifvorrichtung (30) nach Anspruch 10, **dadurch gekennzeichnet, dass** der Abstand (AS) vom Bereich, in dem die Eingriffselemente (33) im Endbereich (31) angeordnet sind, bis zur Anlagefläche gleich groß oder kleiner ist als der Abstand (AB1) von der umlaufenden Vertiefung (20) bis zur Innenseite (13) der Bodenwandung (1b) des Verschlussdeckels ist.

12. Greifvorrichtung (30) nach einem der Ansprüche 6 bis 11, **dadurch gekennzeichnet, dass** der Endbereich (31) als Einpressdorn dient.

13. Greifvorrichtung (30) nach einem der Ansprüche 6 bis 12, **dadurch gekennzeichnet, dass** die Bohrungen (36) sich durch den gesamten Endbereich (31) erstrecken und einen Durchgangskanal bilden und sich in der Mitte kreuzen.

14. Greifvorrichtung (30) nach einem der Ansprüche 6 bis 13, **dadurch gekennzeichnet, dass** die Länge (41) des Gehäuses (40) der Kugelrasten (39) kürzer als der Radius des Bereichs (35) des Endbereichs (31) ist, derart, dass bei bereits einer eingeschraubten Kugelraste (39) eine weitere Kugelraste (39) mittels eines durch die entsprechende Bohrung (36) geführten Werkzeugs in die Bohrung einschraubbar ist.

15. Verfahren zum Verschließen einer Bohrung (B) mittels eines Verschlussdeckels (1), welcher mit einer Greifvorrichtung (30) in die Bohrung (B) einbringbar ist, wobei der Verschlussdeckel (1) topfförmig ausgebildet ist, und eine Bodenwandung (1b) sowie eine daran angeformte Seitenwandung (1s) und einen Innendurchmesser (DI) aufweist, wobei die Seitenwandung (1s) an ihrer Innenseite mindestens eine umlaufende Vertiefung (20) in Form einer Rille oder Nut aufweist, wobei beim Greifen des Verschlussdeckels (1) mittels der Greifvorrichtung (30) deren Eingriffselemente (33) in die umlaufende Vertiefung (20) eingreifen.

## Claims

1. Closure cap (1) for a bore (B), which may be inserted into the bore (B) with a gripping device (30), wherein the closure cap (1) comprises an inner diameter (DI), wherein the closure cap (1) is pot-shaped and comprises a base wall (1b) and a side wall (1s) moulded thereon, wherein the side wall (1s) is formed circumferential and conical, **characterised in that** the side wall (1s) has at least one circumferential depression (20) in the form of a groove or slot on its inner side, wherein the circumferential depression (20) serves for the engagement of engagement elements (33) of the gripping device (30).

2. Closure cap (1) according to claim 1, **characterised in that** the width (B) of the depression (20) is 0.4 - 2.0 mm.

3. Closure cap (1) according to one of the preceding claims, **characterised in that** the depth (T) of the depression (20) is 0.2 - 1.0 mm.

4. Closure cap (1) according to one of the preceding claims, **characterised in that** the distance (AB) of the depression (20) from the front side (S) of the opening side (ÖS) of the closure cap (1) is 1.5 - 4.5 mm.

5. Closure cap (1) according to one of the preceding claims, **characterised in that** the side wall (1s) comprises on its outer side (14) at least one circumferential depression (1n), particularly a groove or slot, which serves for the reception of adhesive and/or sealing material.

6. Gripping device (30) for gripping a closure cap (1) according to one of claims 1 to 5, wherein the gripping device (30) has an end region (31) on which a plurality of engagement elements (33) projecting from the surface (O) of the lateral surface (M) are arranged around the circumference and wherein the engagement elements (33) can be pressed at least partially into the end region (31) against a spring force, **characterised in that** a region (35) comprises a plurality of radial bores (36), in which the engagement elements (33) are arranged and wherein the bores (36) are at least partially provided with an internal thread (37), into each of which a ball detent (39) may be screwed or is screwed, wherein the balls of the ball detents (39) form the engagement elements (33).

7. Gripping device (30) for gripping a closure cap (1) according to claim 6, **characterised in that** the end region (31) has a cylindrical or conical lateral surface (M).

8. Gripping device (30) according to claim 6 or 7, **characterised in that** the end region (31) has a circular cross-section.

9. Gripping device (30) according to one of claims 6 to 8, **characterised in that** the shape and diameter of the end region (31) is such that it can engage in the pot-shaped closure cap (1), wherein the outer diameter (DA) of the circumferential region (35) of the end region (31), in which the engagement elements (33) are arranged, is smaller than the inner diameter (DI) of the side wall (1s) of the closure cap (1).

10. Gripping device (30) according to one of claims 6 to 9, **characterised in that** the end region (31) has a front side (34) which is formed as a contact surface, and, when the closure cap (1) is pressed into a bore, the gripping device (30) presses with the front side (34) against the inside (13) of the base wall (1b) of the closure cap (1).

11. Gripping device (30) according to claim 10, **characterised in that** the distance (AS) from the region in which the engagement elements (33) are arranged in the end region (31) to the contact surface is equal to or smaller than the distance (AB1) from the circumferential depression (20) to the inside (13) of the base wall (1b) of the closure cap (1).

12. Gripping device (30) according to one of claims 6 to 11, **characterised in that** the end region (31) serves as a fitting mandrel.

13. Gripping device (30) according to one of claims 6 to 12, **characterised in that** the bores (36) extend through the entire end region (31) and form a through-channel and intersect in the middle.

14. Gripping device (30) according to one of claims 6 to 13, **characterised in that** the length (41) of the housing (40) of the ball detents (39) is shorter than the radius of the region (35) of the end region (31) in such a way that, with a ball detent (39) already screwed in, a further ball detent (39) can be screwed into the bore (36) using a tool guided through the respective bore (36).

15. Method for closing a bore (B) using a closure cap (1) which can be inserted into the bore (B) with a gripping device (30), the closure cap (1) being pot-shaped and comprises a base wall (1b) and a side wall (1s) moulded thereon and an inner diameter (DI), wherein the side wall (1s) has at least one circumferential depression (20) in the form of a groove or slot on its inner side, wherein when the closure cap (1) is gripped with the gripping device (30), the engagement elements (33) of the latter engage with the circumferential depression (20).

## Revendications

1. Couvercle de fermeture (1) pour un alésage (B), qui est introduisable dans l'alésage (B) avec un dispositif de préhension (30), le couvercle de fermeture (1) présentant un diamètre intérieur (DI), le couvercle de fermeture (1) étant réalisé en forme de pot et présentant une paroi de fond (1b) ainsi qu'une paroi latérale (1s) formée sur celle-ci, la paroi latérale (1s) étant périphérique et de forme conique, **caractérisé en ce que** la paroi latérale (1s) présente sur sa face intérieure au moins un renfoncement périphérique (20) sous forme de rainure ou de gorge, le renfoncement périphérique (20) servant à l'engagement d'éléments d'engagement (33) du dispositif de préhension (30).

2. Couvercle de fermeture (1) selon la revendication 1, **caractérisé en ce que** la largeur (B) du renfoncement (20) est de 0,4 à 2,0 mm.

3. Couvercle de fermeture (1) selon l'une des revendications précédentes, **caractérisé en ce que** la profondeur (T) du renfoncement (20) est de 0,2 à 1,0 mm.

4. Couvercle de fermeture (1) selon l'une des revendications précédentes, **caractérisé en ce que** la distance (AB) entre le renfoncement (20) et la face frontale (S) du côté ouverture (OS) du couvercle de fermeture (1) est de 1,5 à 4,5 mm.

5. Couvercle de fermeture (1) selon l'une des revendications précédentes, **caractérisé en ce que** la paroi latérale (1s) présente sur sa face extérieure (14) au moins un renfoncement périphérique (1n), en particulier une rainure ou une gorge, qui sert à recevoir de la colle et/ou un matériau d'étanchéité.

6. Dispositif de préhension (30) destiné à saisir un couvercle de fermeture (1) selon l'une des revendications 1 à 5, le dispositif de préhension (30) présentant une zone d'extrémité (31) sur laquelle sont disposés, autour de la périphérie, plusieurs éléments d'engagement (33) faisant saillie de la surface (O) de la surface d'enveloppe (M) et des éléments d'engagement (33) pouvant être enfoncés au moins partiellement dans la zone d'extrémité (31) contre une force élastique, **caractérisé en ce qu'**une zone (35) présente plusieurs alésages radiaux (36) dans lesquels sont disposés les éléments d'engagement (33) et les alésages (36) étant pourvus, au moins par zones, d'un filetage intérieur (37) dans chacun desquels un loqueteau à billes (39) est vissable ou vissé, les billes des loqueteaux à billes (39) formant les éléments d'engagement (33).

7. Dispositif de préhension (30) destiné à saisir un couvercle de fermeture (1) selon la revendication 6, **caractérisé en ce que** la zone d'extrémité (31) présente une surface d'enveloppe (M) cylindrique ou conique.

8. Dispositif de préhension (30) selon la revendication 6 ou 7, **caractérisé en ce que** la zone d'extrémité (31) est de forme circulaire en section transversale.

9. Dispositif de préhension (30) selon l'une des revendications 6 à 8, **caractérisé en ce que** la zone d'extrémité (31) est configurée, de par sa forme et son diamètre, pour s'engager dans le couvercle de fermeture (1) en forme de pot, le diamètre extérieur (DA) de la zone périphérique (35) de la zone d'extrémité (31), dans laquelle sont disposés les éléments d'engagement (33), étant inférieur au diamètre intérieur (DI) de la paroi latérale (1s) du couvercle de fermeture (1).

10. Dispositif de préhension (30) selon l'une des revendications 6 à 9, **caractérisé en ce que** la zone d'extrémité (31) présente une face frontale (34) qui est conçue comme une surface d'appui, et le dispositif de préhension (30), lors de l'enfoncement du couvercle de fermeture (1) dans un alésage, appuie avec la face frontale contre la face intérieure (13) de la paroi de fond (1b) du couvercle de fermeture (1).

11. Dispositif de préhension (30) selon la revendication 10, **caractérisé en ce que** la distance (AS) entre la zone dans laquelle les éléments d'engagement (33) sont disposés dans la zone d'extrémité (31) et la surface d'appui est égale ou inférieure à la distance (AB1) entre le renfoncement périphérique (20) et la face intérieure (13) de la paroi de fond (1b) du couvercle de fermeture.

12. Dispositif de préhension (30) selon l'une des revendications 6 à 11, **caractérisé en ce que** la zone d'extrémité (31) sert de mandrin d'enfoncement.

13. Dispositif de préhension (30) selon l'une des revendications 6 à 12, **caractérisé en ce que** les alésages (36) s'étendent à travers toute la zone d'extrémité (31) et forment un canal de passage et se croisent au milieu.

14. Dispositif de préhension (30) selon l'une des revendications 6 à 13, **caractérisé en ce que** la longueur (41) du boîtier (40) des loqueteaux à billes (39) est plus courte que le rayon de la zone (35) de la zone d'extrémité (31), de telle sorte que, lorsqu'un loqueteau à billes (39) est déjà vissé, un autre loqueteau à billes (39) est vissable dans l'alésage au moyen d'un outil guidé à travers l'alésage correspondant (36).

15. Procédé destiné à fermer un alésage (B) au moyen d'un couvercle de fermeture (1) qui est introduisable dans l'alésage (B) avec un dispositif de préhension (30), le couvercle de fermeture (1) étant réalisé en forme de pot et présentant une paroi de fond (1b) ainsi qu'une paroi latérale (1s) formée sur celle-ci et un diamètre intérieur (DI), la paroi latérale (1s) présentant sur sa face intérieure au moins un renfoncement périphérique (20) sous forme de rainure ou de gorge, des éléments d'engagement (33) du dispositif de préhension (30) s'engageant dans le renfoncement périphérique (20) lors de la préhension du couvercle de fermeture (1) au moyen de celui-ci.
